# EUROPÄISCHE PATENTSCHRIFT

(11) **EP 4 001 205 B1**
(45) Veröffentlichungstag und Bekanntmachung des Hinweises auf die Patenterteilung: **25.02.2026**
(21) Anmeldenummer: 21201154.8
(22) Anmeldetag: 06.10.2021
(51) Int. Cl.: B66F 9/06, B62D 53/00

(54) **HUBVORRICHTUNG EINES ROUTENZUGANHÄNGERS UND ROUTENZUGANHÄNGER MIT EINER HUBVORRICHTUNG**
LIFTING DEVICE OF A TUGGER TRAIN TRAILER AND TUGGER TRAIN TRAILER HAVING A LIFTING DEVICE
DISPOSITIF DE LEVAGE D'UNE REMORQUE DE TRAIN DE MANUTENTION ET REMORQUE DE TRAIN DE MANUTENTION COMPORTANT UN DISPOSITIF DE LEVAGE

(30) Priorität: 11.11.2020 DE 102020129747
(43) Veröffentlichungstag der Anmeldung: 25.05.2022
(73) Patentinhaber: LR Intralogistik GmbH, 84109 Wörth a. d. Isar (DE)
(72) Erfinder: Zimmer, Michael, 84066 Mallersdorf-Pfaffenberg (DE); Kollmannsberger, Josef, 84106 Volkenschwand (DE)
(74) Vertreter: Patentship Patentanwaltgesellschaft

(56) Entgegenhaltungen:
- EP-A2- 2 487 067
- DE-A1- 102011 017 346
- DE-A1- 102014 100 865

## Beschreibung

Die Erfindung betrifft eine Hubvorrichtung eines Routenzuganhängers zum Anheben und Absenken eines in dem Routenzuganhänger mitgeführten Ladungsträgers, wobei die Hubvorrichtung zum Anheben und Absenken des Ladungsträgers mindestens eine in vertikaler Richtung höhenverstellbare Auflageschiene aufweist, die ausgeführt ist, den Ladungsträger zu untergreifen wobei die Auflageschiene in horizontaler Richtung zwischen einer eingefahrenen Stellung und einer ausgefahrenen Stellung bewegbar ist.

Die Erfindung betrifft weiterhin einen Routenzuganhänger mit einem Fahrgestell und einer Hubvorrichtung.

Die Erfindung betrifft weiterhin ein System umfassend einen derartigen Routenzuganhänger und mindestens einen Ladungsträger.

Eine gattungsgemäße Hubvorrichtung eines Routenzuganhängers mit den Merkmalen des Oberbegriffs des Patentanspruchs 1 ist aus der DE 10 2011 017 346 A1 bekannt.

Die EP 2 487 067 A2 offfenbart einen Routenzuganhänger mit in Fahrzeugquerrichtung angeordneten, als Teleskopgabelzinken ausgebildeten Gabelzinken.

Für den innerbetrieblichen Transport von Ladungen, beispielsweise im Produktionsbereich von Produktionsbetrieben, kommen zunehmend Routenzüge zum Einsatz, die aus einem Zugfahrzeug, beispielsweise einem Schlepper, und einer Mehrzahl von an dem Schlepper angehängten Routenzuganhängern bestehen, auf denen die Ladungen transportiert werden.

Aus der Figur 4 der DE 10 2014 100 865 A1 ist ein Routenzuganhänger mit einem Fahrgestell bekannt, das ein Vorderachsmodul und ein Hinterachsmodul umfasst. Das Vorderachsmodul und das Hinterachsmodul umfassen jeweils ein Hubmastprofil, in denen eine die Ladung aufnehmende Transportvorrichtung anhebbar und absenkbar angeordnet ist. Die anhebbare und absenkbare Transportvorrichtung weist gemäß der Figur 4 der DE 10 2014 100 865 A1 Auflageschienen auf, die auch als Hublippen bezeichnet werden, mit denen ein als Rollwagen ausgebildeter Bodenroller als Ladungsträger angehoben und abgesenkt werden kann. Die Auflageschienen sind von starren Tragleisten gebildet, die eine rein vertikale Hubbewegung ausführen.

Aus der EP 2 431 253 B1 ist ein entsprechender Bodenroller bekannt, der eine Tragplatte als rechteckförmigen Tragrahmen aufweist, wobei direkt an der Unterseite der Tragplatte an den vier Eckbereichen jeweils eine Laufrolle angeordnet ist, mit denen sich der Bodenroller auf einer Fahrbahn abstützt. Mit den Laufrollen kann der Bodenroller über kürzerer Strecken geschoben bzw. gezogen werden, beispielsweise per Hand von einer Person. Um den Bodenroller über längere Strecken zu transportieren, kann der Bodenroller in Routenzuganhängern mit den anhebbaren und absenkbaren Auflageschienen angehoben und transportiert werden. Hierzu ist der Routenzuganhänger für jeden Bodenroller mit zwei anhebbaren und absenkbaren Auflageschienen versehen, die den Tragrahmen des Bodenrollers an gegenüberliegenden Seiten untergreifen und anheben.

Bei bekannten Bodenrollern, bei denen die Rollen bündig mit der Außenkontur des Tragrahmens angeordnet sind, ist jedoch nachteilig, dass derartige Bodenroller von den eine reine vertikale Hubbewegung ausführenden Auflageschienen des Routenzuganhängers nicht angehoben werden können, da die Rollen des Bodenrollers in Einschubrichtung, d.h. in derjenigen Richtung, in der der Bodenroller in den Routenzuganhänger eingeschoben wird, eine Störkontur darstellen. Dadurch ist der Routenzuganhänger nicht universell für verschiedene Ladungsträger einsetzbar.

Der vorliegenden Erfindung liegt die Aufgabe zugrunde, eine Hubvorrichtung eines Routenzuganhängers und einen Routenzuganhänger mit einer Hubvorrichtung zur Verfügung zu stellen, die den oben genannten Nachteile vermeidet.

Diese Aufgabe wird erfindungsgemäß gelöst durch eine Hubvorrichtung eines Routenzuganhängers zum Anheben und Absenken eines in dem Routenzuganhänger mitgeführten Ladungsträgers, wobei die Hubvorrichtung zum Anheben und Absenken des Ladungsträgers mindestens eine in vertikaler Richtung höhenverstellbare Auflageschiene aufweist, die ausgeführt ist, den Ladungsträger zu untergreifen, wobei die Auflageschiene in horizontaler Richtung zwischen einer eingefahrenen Stellung und einer ausgefahrenen Stellung bewegbar ist, wobei die Hubvorrichtung ausgeführt ist, eine horizontale Bewegung der Auflageschiene in horizontaler Richtung und eine an die horizontale Bewegung anschließende vertikale Bewegung der Auflageschiene in vertikaler Richtung zu erzeugen, wobei die Hubvorrichtung einen Hubaktuator aufweist, der mittels einer Koppeleinrichtung mit mindestens einer Auflageschiene in Wirkverbindung steht, wobei die Koppeleinrichtung ausgebildet ist, eine vertikale Hubbewegung des Hubaktuators in die horizontale Bewegung und in die an die horizontale Bewegung anschließende vertikale Bewegung der Auflageschiene umzuwandeln.

Mit erfindungsgemäßen Auflageschienen, die in horizontaler Richtung zwischen einer eingefahrenen Stellung und einer ausgefahrenen Stellung bewegbar sind, kann das Problem der Störkontur zwischen Auflageschiene und Rollen des Bodenrollers, die bündig mit der Außenkontur des Tragrahmens des Bodenrollers angeordnet sind, in einfacher Weise gelöst werden. Beim Einschieben des Bodenrollers in den Routenzuganhänger befinden sich die Auflageschienen in der eingefahrenen Stellung. Die Auflageschienen werden erst dann in die ausgefahrene Stellung betätigt, in der die Auflageschienen den Bodenroller an dem Tragrahmen untergreifen können, wenn der Bodenroller in den Routenzuganhänger eingeschoben wurde und an der richtigen Stelle steht. Mit derartigen Auflageschienen können somit ebenfalls Bodenroller mit bündig an der Außenkontur angeordneten Rollen mit dem Routenzuganhänger transportiert werden, so dass der Routenzuganhänger universell für verschiedene Ladungsträger verwendet werden kann.

Gemäß der Erfindung ist die Hubvorrichtung derart ausgeführt, eine horizontale Bewegung der Auflageschiene von der eingefahrenen Stellung in die ausgefahrene Stellung in horizontaler Richtung und eine an die horizontale Bewegung anschließende vertikale Bewegung der Auflageschiene von einer abgesenkten Stellung in eine angehobene Stellung in vertikaler Richtung zu erzeugen. Dadurch ergibt sich ein geringer Bauaufwand, da die Hubvorrichtung sowohl die horizontale Bewegung der Auflageschiene von der eingefahrenen Stellung in die ausgefahrene Stellung als auch die dran anschließende vertikale Bewegung der Auflageschiene von der abgesenkten Stellung in die angehobene Stellung erzeugt.

Gemäß der Erfindung weist die Hubvorrichtung einen Hubaktuator auf, der mittels einer Koppeleinrichtung mit mindestens einer Auflageschiene in Wirkverbindung steht, wobei die Koppeleinrichtung ausgebildet ist, eine vertikale Hubbewegung des Hubaktuators in die horizontale Bewegung von der eingefahrenen Stellung in die ausgefahrene Stellung und in die an die horizontale Bewegung anschließende vertikale Bewegung von der abgesenkten Stellung in die angehobene Stellung der Auflageschiene umzuwandeln. Die Auflageschiene ist somit mittels der Koppeleinrichtung mechanisch derart mit dem Hubaktuator gekoppelt, dass die vertikale Hubbewegung des Hubaktuators in die horizontale Bewegung und in die anschließende vertikale Bewegung der Auflageschiene umgewandelt wird.

Mit besonderem Vorteil ist gemäß einer vorteilhaften Ausgestaltungsform der Erfindung die Koppeleinrichtung derart ausgebildet, dass in einem ersten Hubbereich des Hubaktuators die horizontale Bewegung der Auflageschiene von der eingefahrenen Stellung in die ausgefahrene Stellung und in einem anschließenden zweiten Hubbereich die vertikale Bewegung der Auflageschiene von der abgesenkten Stellung in die angehobene Stellung erzeugbar ist. Die Auflageschiene ist somit mittels der Koppeleinrichtung mechanisch derart geführt, dass der Hubaktuator in einem ersten Hubbereich des Hubaktuators die horizontale Bewegung der Auflageschiene und in einem anschließenden zweiten Hubbereich die vertikale Bewegung der Auflageschiene erzeugt, so dass der Hubaktuator zum Aufnehmen eines Ladungsträgers zuerst die Auflageschienen von der eingefahrenen Stellung in die ausgefahrene Stellung ausfährt und anschließend die Auflageschienen von der abgesenkten Stellung in die angehobene Stellung anhebt bzw. zum Absetzen eines Ladungsträgers zuerst die Auflageschienen von der angehobenen Stellung in die abgesenkte Stellung absenkt und anschließend die Auflageschienen von der ausgefahrenen Stellung in die eingefahrene Stellung einfährt.

Die Koppeleinrichtung weist gemäß einer vorteilhaften Ausführungsform der Erfindung ein Kulissenelement auf, das mit mindestens einer L-förmigen Kulisse, insbesondere einem L-förmigen Langloch, versehen ist, in der die Auflageschiene geführt ist. Mit einer derartigen L-förmigen Kulisse, die bevorzugt einen horizontalen Schenkel und einen vertikalen Schenkel aufweist, in denen die Auflageschiene geführt ist, kann in einfacher Weise eine horizontale Bewegung der Auflageschiene von der eingefahrenen Stellung in die ausgefahrene Stellung und eine an die horizontale Bewegung anschließende vertikale Bewegung der Auflageschiene von der abgesenkten Stellung in die angehobene Stellung erzeugt werden.

Besondere Vorteile ergeben sich, wenn die Auflageschiene gemäß einer Ausgestaltungsform der Erfindung mittels eines Führungselements, insbesondere einer Rolle oder eines Gleitsteins, in der L-förmigen Kulisse geführt ist. Dadurch kann eine geringe Reibung für die Führung der Auflageschiene in der Kulisse erzielt werden.

Gemäß einer vorteilhaften Ausgestaltungsform der Erfindung weist die Koppeleinrichtung ein mit dem Hubaktuator in Wirkverbindung stehendes Betätigungselement aufweist, das mit mindestens einer Mitnehmerausnehmung, insbesondere einem Langloch, versehen ist, in der die Auflageschiene mit dem Führungselement geführt ist. Der Hubaktuator betätigt somit mittels des Betätigungselements die Auflageschiene. Die Auflageschiene ist hierbei mittels des Führungselements in der L-förmigen Kulisse des Kulissenelements und in der Mitnehmerausnehmung des Betätigungselements geführt, wodurch die vertikale Bewegung des Hubaktuators und somit die vertikale Bewegung des Betätigungselements in einfacher Weise in die von der L-förmigen Kulisse definierte horizontale Bewegung von der eingefahrenen Stellung in die ausgefahrene Stellung und die anschließende vertikale Bewegung von der abgesenkten Stellung in die angehobene Stellung der Auflageschiene umgewandelt wird.

Die Mitnehmerausnehmung ist gemäß einer vorteilhaften Ausgestaltungsform der Erfindung als gegenüber der Vertikalen geneigtes Langloch ausgebildet. Mit der Erstreckung des geneigten Langlochs in vertikaler Richtung kann in einfacher Weise die Größe des ersten Hubbereichs des Hubaktuators vorgegeben werden, in dem die horizontale Bewegung der Auflageschiene von der eingefahrenen Stellung in die ausgefahrene Stellung erzeugt wird.

Vorteilhafterweise ist das Betätigungselement an dem Kulissenelement in vertikaler Richtung geführt.

Die Aufgabe wird ebenfalls gelöst durch einen Routenzuganhänger mit einem Fahrgestell, das zwei in Fahrzeuglängsrichtung beabstandet angeordnete Achsmodule aufweist, zwischen denen mindestens ein mitgeführter Ladungsträger aufnehmbar ist, wobei der Routenzuganhänger mit einer erfindungsgemäßen Hubvorrichtung versehen ist.

Der Routenzuganhänger weist gemäß einer vorteilhaften Ausgestaltungsform der Erfindung einen die Achsmodule verbindenden Brückenrahmen auf, der an den Achsmodulen angeordnete Vertikalstützen und einen die Vertikalstützen verbindenden Längsträger aufweist, wobei an den Vertikalstützen jeweils eine erfindungsgemäße Hubvorrichtung mit einer Auflageschiene angeordnet ist. Der Brückenrahmen verbindet und überspannt die beiden Achsmodule, zwischen denen ein oder mehrere Ladungsträger angeordnet sind. Mit an den jeweiligen Vertikalstützen angeordneten Hubvorrichtungen, die jeweils eine Auflageschiene aufweisen, kann ein oder mehrere Ladungsträger in einfacher Weise aufgenommen werden.

Sofern gemäß einer Weiterbildung der Erfindung an dem Längsträger ein vertikaler Mittelträger angeordnet ist, wobei an dem Mittelträger eine Hubvorrichtung mit zwei Auflageschienen angeordnet ist, können mit dem Rutenzuganhänger in einfacher Weise zwei Ladungsträger aufgenommen und transportiert werden.

Die Auflageschienen verlaufen hierbei jeweils in Fahrzeugquerrichtung des Routenzuganhängers und die horizontale Bewegung der Auflageschienen verläuft in Fahrzeuglängsrichtung des Routenzuganhängers. Der Ladungsträger kann somit in Fahrzeugquerrichtung zwischen die in der eingefahrenen Stellung befindlichen Auflageschienen eingeschoben werden ohne Störkonturen für die Auflageschienen zu verursachen.

Die Erfindung betrifft weiterhin ein System umfassend einen erfindungsgemäßen Routenzuganhänger und mindestens einen Ladungsträger, wobei die Aufnahmeschienen mit der Unterseite eines Bauteils des Ladungsträgers in Wirkverbindung bringbar sind. Die Aufnahmeschienen untergreifen somit ein entsprechendes Bauteil des Ladungsträgers, um diesen im Routenzuganhänger anzuheben.

Der Ladungsträger kann als Bodenroller ausgebildet sein, der einen mit Rollen versehenen Tragrahmen aufweist. Der Ladungsträger kann weiterhin als Palette, beispielsweise als Europalette, oder als Gitterbox oder als fahrerloses Transportfahrzeug ausgebildet sein. Mit den in horizontaler Richtung zwischen einer eingefahrenen Stellung und einer ausgefahrenen Stellung bewegbaren Auflageschienen des Routenzuganhängers können verschiedenste Ladungsträger im Routenzuganhänger angehoben und transportiert werden. Die Ladungsträger müssen nur ein entsprechendes Bauteil aufweisen, das mit den Auflageschienen untergreifbar ist.

Die Erfindung weist eine Reihe von Vorteilen auf.

Ein mit den erfindungsgemäßen Auflageschienen ausgestatteter Routenzuganhänger, wobei die Auflageschienen zusätzlich zu der vertikalen Bewegung in horizontaler Richtung zwischen einer eingefahrenen Stellung und einer ausgefahrenen Stellung bewegbar sind, kann die verschiedensten Ladungsträger, beispielswiese Paletten, Gitterboxen, Bodenroller oder fahrerlose Transportfahrzuge anheben und transportieren, sofern die entsprechenden Ladungsträger von den Auflageschienen untergriffen werden können.

Durch eine Anpassung der Form und/oder Gestaltung der Auflageschienen kann auf einfache Weise eine Anpassung an verschiedene Ladungsträger erzielt werden. Zudem kann durch die Ausgestaltung und Ausführung der L-förmigen Kulissen und/oder der Mitnehmerausnehmungen in einfacher Weise eine Anpassung des horizontalen Verfahrweges und des vertikalen Verfahrweges der Auflageschienen erzielt werden.

Weitere Vorteile und Einzelheiten der Erfindung werden anhand des in den schematischen Figuren dargestellten Ausführungsbeispiels näher erläutert. Hierbei zeigt
- Figur 1: einen erfindungsgemäßen Routenzuganhänger mit einer erfindungsgemäßen Hubvorrichtung in einer perspektivischen Darstellung,
- Figur 2: den Routenzuganhänger der Figur 1 in einer Seitenansicht in einer unteren Endstellung der Hubvorrichtung mit eingefahrenen und abgesenkten Auflageschienen,
- Figur 3: den Routenzuganhänger der Figur 1 in einer Seitenansicht in einer oberen Endstellung der Hubvorrichtung mit ausgefahrenen und angehobenen Auflageschienen,
- Figur 4: einen Ausschnitt der Figur 2 mit der in der unteren Endstellung befindlichen Hubvorrichtung mit eingefahrenen und abgesenkten Auflageschienen,
- Figur 5: eine Darstellung gemäß der Figur 4 mit der in einer Zwischenstellung befindlichen Hubvorrichtung mit ausgefahrenen und abgesenkten Auflageschienen,
- Figur 6: eine Darstellung gemäß der Figur 4 mit der in oberen Endstellung befindlichen Hubvorrichtung mit ausgefahrenen und angehobenen Auflageschienen,
- Figur 7: ein Kulissenelement der erfindungsgemäßen Hubvorrichtung und
- Figur 8: ein Betätigungselement der erfindungsgemäßen Hubvorrichtung.

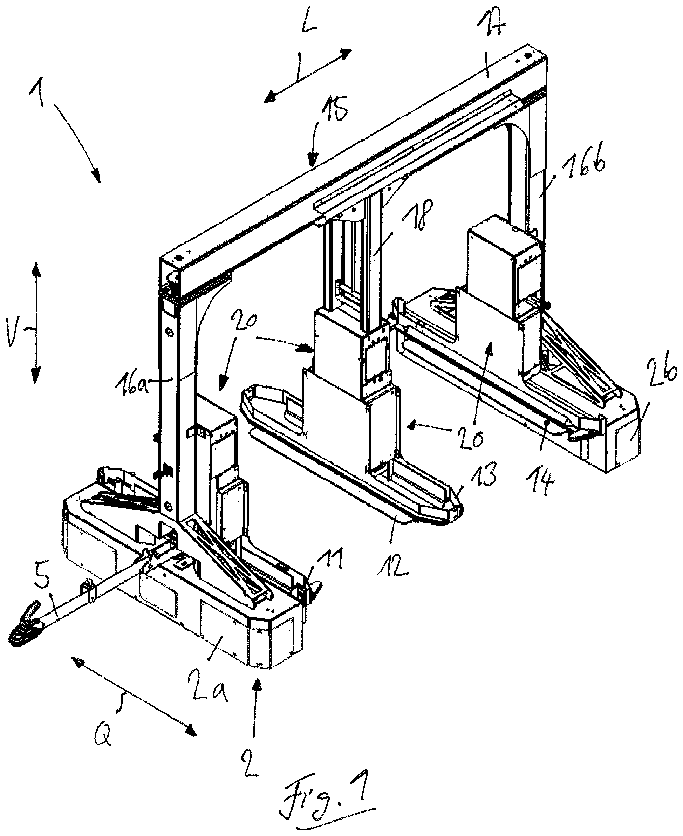

In den Figuren 1 bis 3 ist ein erfindungsgemäßer Routenzuganhänger 1 eines Routenzugs dargestellt.

Der Routenzuganhänger 1 weist ein Fahrgestell 2 auf, das zwei in Fahrzeuglängsrichtung L beabstandet angeordnete Achsmodule 2a, 2b aufweist. Das Achsmodul 2a ist als Vorderachsmodul ausgebildet und mit Vorderrädern 3 versehen. Das Achsmodul 2b ist als Hinterachsmodul ausgebildet und mit Hinterrädern 4 versehen. An dem Achsmodul 2a ist eine lenkbare Deichsel 5 angeordnet, mit der der Routenzuganhänger 1 an ein Zugfahrzeug oder einen vorausfahrenden Routenzuganhänger des Routenzugs angehängt werden kann. Das Achsmodul 2b ist mit einer Anhängekupplung 6 versehen, an die ein weiterer Routenzuganhänger des Routenzugs angehängt werden kann. Die Vorderräder 3 und/oder die Hinterräder 4 können gelenkt sein. Sofern sowohl die Vorderräder 3 als auch die Hinterräder 4 gelenkt sind, kann die Lenkbewegung der Vorderräder und die Lenkbewegung der Hinterräder gekoppelt sein.

Zwischen dem Achsmodul 2a und dem Achsmodul 2b kann mindestens ein nicht näher dargestellter Ladungsträger, beispielsweise einen oder mehrere Bodenroller, transportiert werden. Der Routenzuganhänger 1 weist zur Aufnahme des mindestens einen Ladungsträger mehrere Auflageschienen 11-14 auf.

Im dargestellten Ausführungsbeispiel ist der Routenzuganhänger 1 ausgebildet, zwei Ladungsträger aufzunehmen. Der Routenzuganhänger 1 weist für die Aufnahme eines vorderen Ladungsträgers zwei in vertikaler Richtung V höhenverstellbare Auflageschienen 11, 12 und für die Aufnahme eines hinteren Ladungsträgers zwei höhenverstellbare Auflageschienen 13, 14 auf. Die Auflageschienen 11-14 verlaufen jeweils in Fahrzeugquerrichtung Q.

Der Routenzuganhänger 1 weist einen die Achsmodule 2a, 2b verbindenden Brückenrahmen 15 auf, der an den Achsmodulen 2a, 2b angeordnete Vertikalstützen 16a, 16b und einen die Vertikalstützen 16a, 16b verbindenden Längsträger 17 aufweist.

Die Auflageschiene 11 ist an der vorderen Vertikalstütze 16a bzw. an dem Vorderachsmodul 2a mittels einer Hubvorrichtung 20 in vertikaler Richtung V höhenverstellbar angeordnet. Die Auflageschiene 14 ist an der hinteren Vertikalstütze 16b bzw. an dem Hinterachsmodul 2b mittels einer Hubvorrichtung 20 in vertikaler Richtung V höhenverstellbar angeordnet. An dem Längsträger 17 ist zwischen den beiden Vertikalträgern 16a, 16b ein vertikaler Mittelträger 18 angeordnet, an dem die beiden Auflageschienen 12, 13 mittels einer Hubvorrichtung 20 in vertikaler Richtung V höhenverstellbar angeordnet sind.

Der vordere Ladungsträger wird zur Aufnahme in dem Routenzuganhänger 1 in Fahrzeugquerrichtung Q des Routenzuganhängers 1 zwischen die Tragleisten 11, 12 eingeschoben. Die Aufnahmeschienen 11, 12 sind ausgeführt, dass diese den Ladungsträger untergreifen können, so dass der Ladungsträger mittels der Hubvorrichtung 20 und den Aufnahmeschienen 11, 12 für den Transport im Routenzuganhänger 1 angehoben werden kann. Der hintere Ladungsträger wird zur Aufnahme in dem Routenzuganhänger 1 in Fahrzeugquerrichtung Q des Routenzuganhängers 1 zwischen die Tragleisten 13, 14 eingeschoben. Die Aufnahmeschienen 13, 14 sind ausgeführt, dass diese den Ladungsträger untergreifen können, so dass der Ladungsträger mittels der Hubvorrichtung 20 und den Aufnahmeschienen 13, 14 für den Transport im Routenzuganhänger 1 angehoben werden kann.

Erfindungsgemäß sind die in vertikaler Richtung V anhebbaren und absenkbaren Auflageschienen 11-14 zusätzlich in horizontaler Richtung, im dargestellten Ausführungsbeispiel in Fahrzeuglängsrichtung L des Routenzuganhängers 1, zwischen einer eingefahrenen Stellung und einer ausgefahrenen Stellung bewegbar.

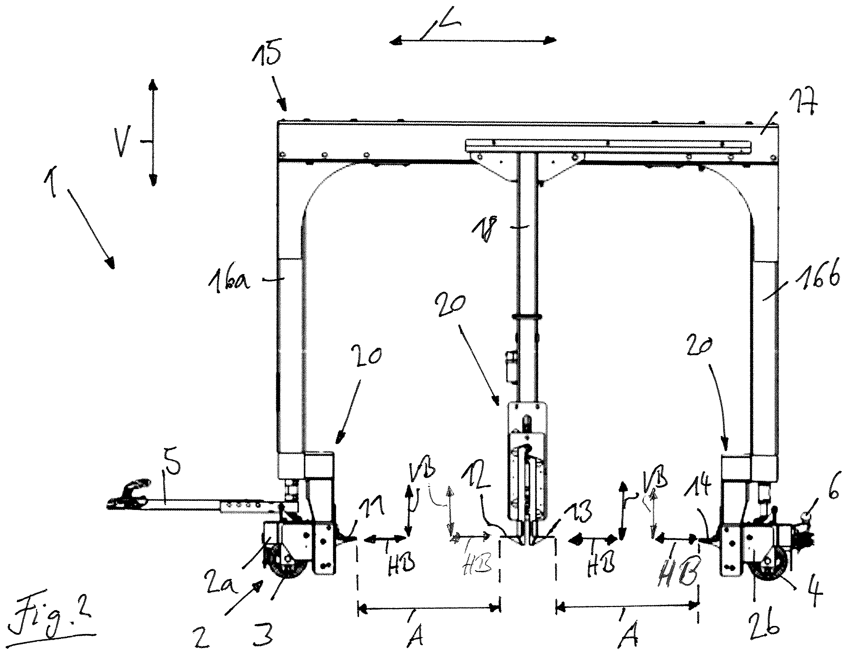

In der Figur 2 befinden sich die Auflageschienen 11-14 in der eingefahrenen Stellung. Die Auflageschiene 11 ist in Fahrzeuglängsrichtung L nach vorne eingefahren. Die Auflageschiene 12 ist in Fahrzeuglängsrichtung L nach hinten eingefahren. Entsprechend ist die Auflageschiene 13 in Fahrzeuglängsrichtung L nach vorne eingefahren und die Auflageschiene 14 in Fahrzeuglängsrichtung L nach hinten eingefahren. Zwischen den beiden vorderen Auflageschienen 11, 12 und den beiden hinteren Auflageschienen 13, 14 ist in Fahrzeuglängsrichtung L jeweils ein Abstand A ausgebildet.

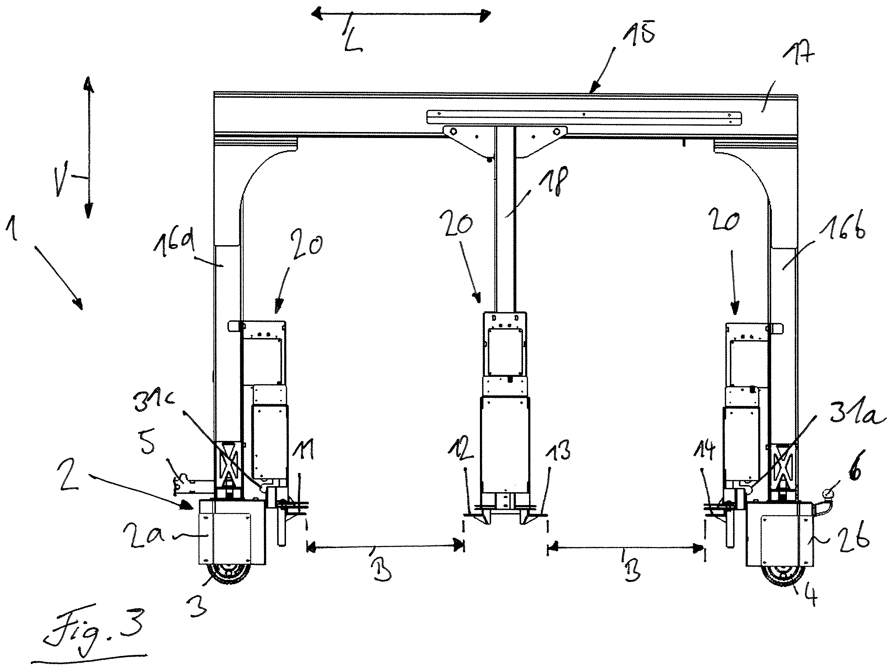

In der Figur 3 befinden sich die Auflageschienen 11-14 in der ausgefahrenen Stellung. Die Auflageschiene 11 ist in Fahrzeuglängsrichtung L nach hinten ausgefahren. Die Auflageschiene 12 ist in Fahrzeuglängsrichtung L nach vorne ausgefahren. Entsprechend ist die Auflageschiene 13 in Fahrzeuglängsrichtung L nach hinten ausgefahren und die Auflageschiene 14 in Fahrzeuglängsrichtung L nach vorne ausgefahren. Zwischen den beiden vorderen Auflageschienen 11, 12 und den beiden hinteren Auflageschienen 13, 14 ist in Fahrzeuglängsrichtung L jeweils ein Abstand B ausgebildet, der kleiner als der Abstand A in der Figur 2 ist.

Im dargestellten Ausführungsbeispiel ist die Hubvorrichtung 20 derart ausgeführt, dass die Hubvorrichtung 20 ausgehend von der Figur 2 jeweils eine horizontale Bewegung HB der entsprechenden Auflageschienen 11-14 von der eingefahrenen Stellung in die ausgefahrene Stellung in horizontaler Fahrzeuglängsrichtung L und eine an die horizontale Bewegung HB anschließende vertikale Bewegung VB der entsprechenden Auflageschienen 11-14 von der abgesenkten Stellung in die angehobene Stellung in vertikaler Richtung V erzeugt.

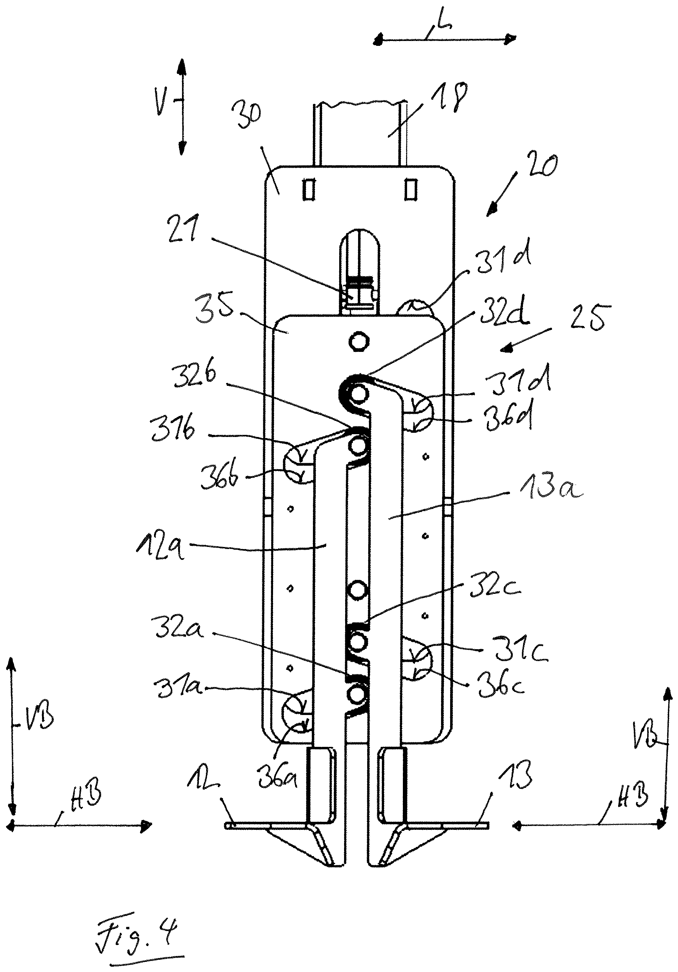

Der Aufbau der erfindungsgemäßen Hubvorrichtung 20 wird im Folgenden anhand der Figuren 4 bis 8 beschrieben, in denen die Hubvorrichtung 20 an dem Mittelträger 18 dargestellt ist, die die beiden Aufnahmeschienen 12, 13 betätigt.

Die Hubvorrichtung 20 weist einen Hubaktuator 21 auf, beispielsweise einen elektrischen Linearantrieb, der mittels einer Koppeleinrichtung 25 mit den beiden Auflageschienen 12, 13 in Wirkverbindung steht. Der Hubaktuator 21 ist im dargestellten Ausführungsbeispiel derart an dem Mittelträger 18 angeordnet, dass der Hubaktuator eine Hubbewegung in vertikaler Richtung V ausführt. Die Koppeleinrichtung 25 ist derart ausgebildet, dass die vertikale Hubbewegung des Hubaktuators 21 in die horizontale Bewegung HB und in die an die horizontale Bewegung HB anschließende vertikale Bewegung VB der entsprechenden Auflageschiene 12, 13 umgewandelt wird.

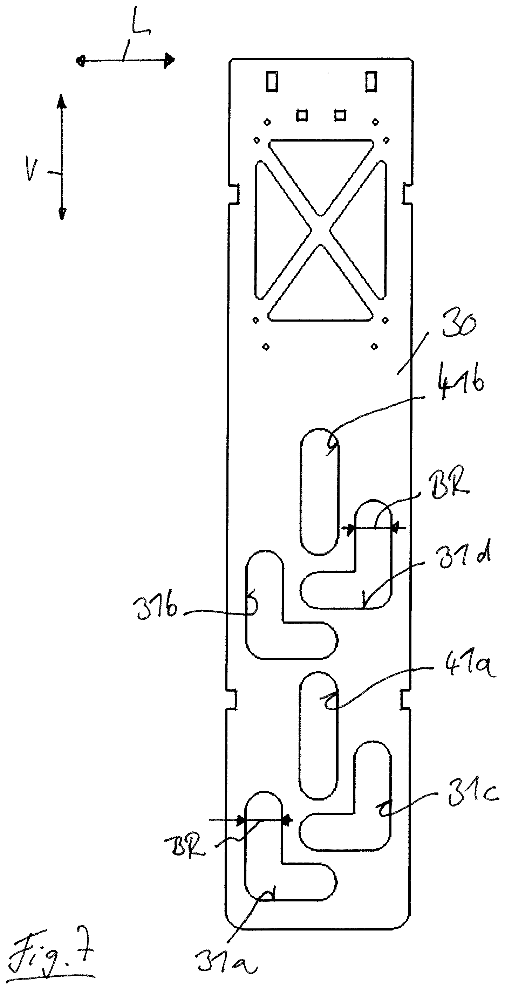

Die Koppeleinrichtung 25, weist ein Kulissenelement 30 auf, dessen Aufbau in der Figur 7 näher ersichtlich ist. Das Kulissenelement 30 ist mit mindestens einer L-förmigen Kulisse 31a, 31b bzw. 31c, 31d versehen, in der die Auflageschiene 12 bzw. 13 geführt ist. Die L-förmigen Kulissen 31a, 31b bzw. 31c, 31d sind im dargestellten Ausführungsbeispiel jeweils als L-förmiges Langloch ausgebildet, die einen horizontalen Abschnitt und eine an den horizontalen Abschnitt an dessen vorderen bzw. hinteren Ende anschließenden vertikalen Abschnitt aufweisen. Die horizontalen Abschnitte der Kulissen 31a-31d verlaufen in Fahrzeuglängsrichtung L und die vertikalen Abschnitte der Kulissen 31-31d in vertikaler Richtung. Die L-förmigen Kulissen 31b ist von der L-förmigen Kulissen 31a in vertikaler Richtung V beabstandet an dem Kulissenelement 30 angeordnet. Entsprechend ist die L-förmigen Kulissen 31d ist von der L-förmigen Kulissen 31c in vertikaler Richtung V beabstandet an dem Kulissenelement 30 angeordnet.

Wie aus der Figur 7 in Verbindung mit der Figur 4 ersichtlich ist, ist in den beiden L-förmigen Kulisse 31a, 31b die Auflageschiene 12 geführt. Um die horizontale Bewegung HB der Auflageschiene 12 in Fahrzeuglängsrichtung L nach Vorne zu erzielen, schließen an den L-förmigen Kulisse 31a, 31b die vertikalen Abschnitte des Langlochs am vorderen Ende des horizontalen Abschnitts des Langlochs an. Die Auflageschiene 12 ist - wie aus der Figur 4 ersichtlich ist - an einem Halter 12a befestigt, der mittels jeweils eines Führungselements 32a, 32b in der L-förmigen Kulisse 31a, 31b geführt ist. Im dargestellten Ausführungsbeispiel sind die Führungselemente 32a, 32b als drehbar an dem Halter 12a angeordnete Rollen ausgebildet. Der Durchmesser der Rollen entspricht im Wesentlichen der Breite BR der als Langlöcher ausgebildeten Kulissen 31a, 31b.

Wie weiterhin aus der Figur 7 in Verbindung mit der Figur 4 ersichtlich ist, ist in den beiden L-förmigen Kulisse 31c, 31d die Auflageschiene 13 geführt. Um die horizontale Bewegung HB der Auflageschiene 13 in Fahrzeuglängsrichtung L nach Hinten zu erzielen, schließen an den L-förmigen Kulisse 31c, 31d die vertikalen Abschnitte des Langlochs am hinteren Ende des horizontalen Abschnitts des Langlochs an. Die Auflageschiene 13 ist - wie aus der Figur 4 ersichtlich ist - an einem Halter 13a befestigt, der mittels jeweils eines Führungselements 32c, 32d in der L-förmigen Kulisse 31c, 31d geführt ist. Im dargestellten Ausführungsbeispiel sind die Führungselemente 32c, 32d als drehbar an dem Halter 13a angeordnete Rollen ausgebildet. Der Durchmesser der Rollen entspricht im Wesentlichen der Breite BR der als Langlöcher ausgebildeten Kulissen 31c, 31d.

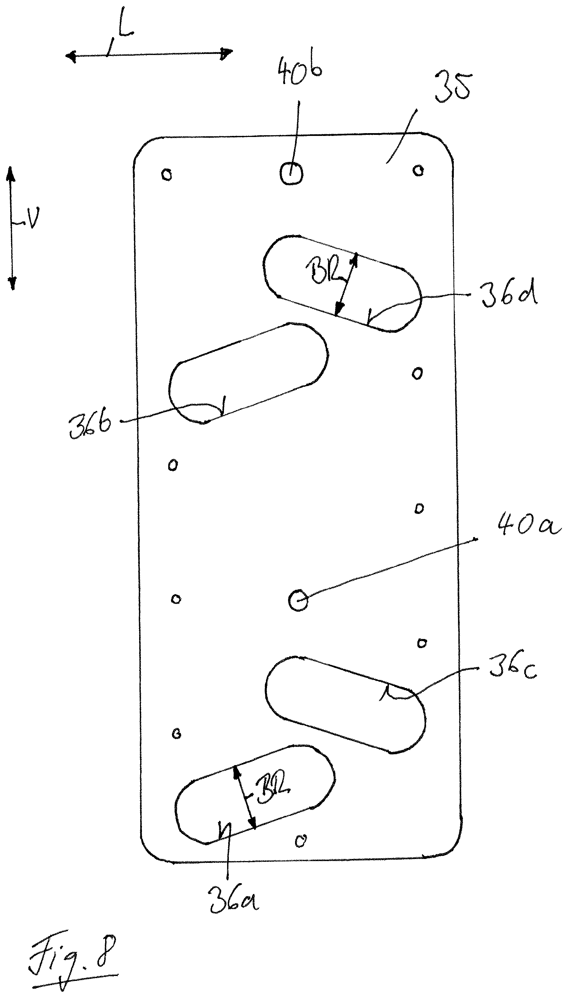

Die Koppeleinrichtung 20 weist weiterhin ein mit dem Hubaktuator 21 in Wirkverbindung stehendes Betätigungselement 35 auf, dessen Aufbau in der Figur 8 näher ersichtlich ist. Das Betätigungselement 35 ist mit mehreren Mitnehmerausnehmungen 36a, 36b, 36c, 36d versehen, in der die Auflageschiene 12 bzw. 13 mit den Führungselementen 32a, 32b, 32c, 32d geführt ist. Die Mitnehmerausnehmungen 36a, 36b, 36c, 36d sind im dargestellten Ausführungsbeispiel jeweils als Langloch ausgebildet. Die Mitnehmerausnehmungen 36a-36d verlaufen in Fahrzeuglängsrichtung L und sind gegenüber der Vertikalen V geneigt angeordnet. Die Auflageschiene 12 ist mittels des als Rolle ausgebildeten Führungselements 32a in der Mitnehmerausnehmung 36a und mittels des als Rolle ausgebildeten Führungselements 32b in der Mitnehmerausnehmung 36b geführt. Entsprechend ist die Auflageschiene 13 ist mittels des als Rolle ausgebildeten Führungselements 32c in der Mitnehmerausnehmung 36c und mittels des als Rolle ausgebildeten Führungselements 32d in der Mitnehmerausnehmung 36d geführt. Die Breite BR der als Langlöcher ausgebildeten Mitnehmerausnehmungen 36a-36d entspricht hierbei im Wesentlichen dem Durchmesser der Rollen.

Das Betätigungselement 35 ist auf nicht näher dargestellte Weise mit dem Hubaktuator 21 verbunden, so dass das Betätigungselement 35 bei einer Betätigung des Hubaktuators 21 in vertikaler Richtung V betätigt wird.

Das Betätigungselement 35 ist an dem Kulissenelement 30 in vertikaler Richtung geführt. Das Betätigungselement 35 ist hierzu im dargestellten Ausführungsbeispiel mit zwei in vertikaler Richtung beabstandet angeordneten Zapfen 40a, 40b versehen, die mittels nicht näher dargestellter Führungselemente, beispielsweise Rollen, in vertikalen Langlöcher 41a, 41b des Kulissenelements 30 geführt sind.

Die Funktion der erfindungsgemäßen Hubvorrichtung 20 wird im Folgenden anhand der Figuren 4 bis 6 erläutert.

Die Figur 4 zeigt die unteren Endstellung der Hubvorrichtung 20. Der Hubaktuator 21 ist eingefahren und das mit dem Hubaktuator 21 gekoppelte Betätigungselement 35 befindet sich in einer unteren Endstellung. Die Führungselemente 32a, 32b der Auflageschiene 12 befinden sich an den oberen Enden der Mitnehmerausnehmungen 36a, 36b des Betätigungselements 35 und an den hinteren Enden der horizontalen Abschnitte der L-förmigen Kulissen 31a, 31b des Kulissenelements 30. Die Auflageschiene 12 befindet sich somit in einer nach hinten eingefahrenen und abgesenkten Stellung. Die Führungselemente 32c, 32d der Auflageschiene 13 befinden sich an den oberen Enden der Mitnehmerausnehmungen 36c, 36d des Betätigungselements 35 und an den vorderen Enden der horizontalen Abschnitte der L-förmigen Kulissen 31c, 31d des Kulissenelements 30. Die Auflageschiene 13 befindet sich somit in einer nach vorne eingefahrenen und abgesenkten Stellung.

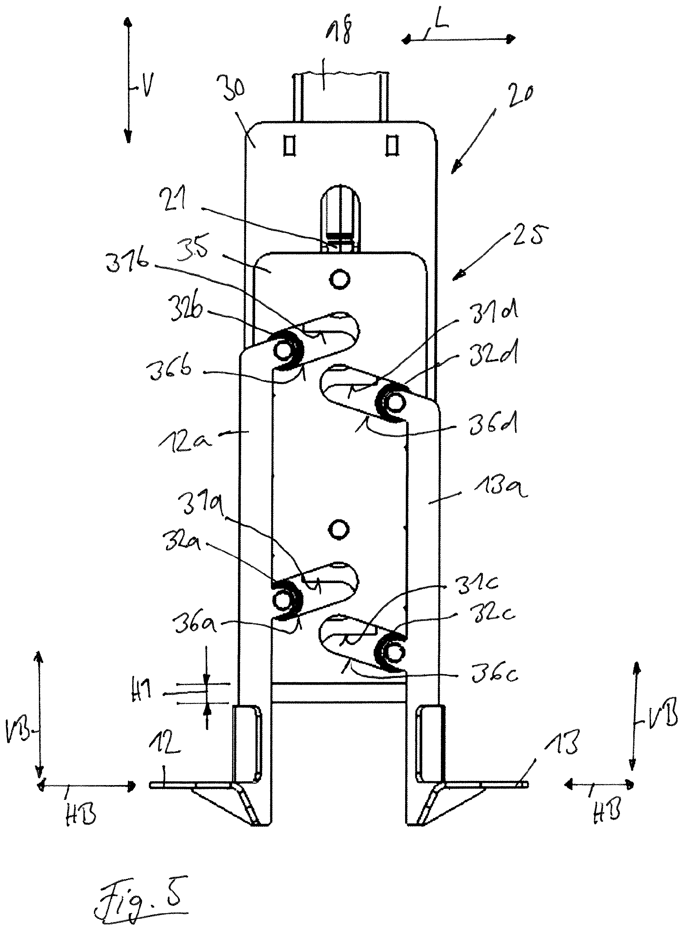

Die Figur 5 zeigt die Hubvorrichtung 20 am Ende eines ersten Hubbereichs H1. Der Hubaktuator 21 ist um den Hub H1 nach vertikal oben ausgefahren und hat das mit dem Hubaktuator 21 gekoppelte Betätigungselement 35 um den Hub H1 angehoben. Die Führungselemente 32a, 32b der Auflageschiene 12 befinden sich an den unteren Enden der Mitnehmerausnehmungen 36a, 36b des Betätigungselements 35 und an den vorderen Enden der horizontalen Abschnitte der L-förmigen Kulissen 31a, 31b des Kulissenelements 30. Die Auflageschiene 12 befindet sich somit in einer nach vorne ausgefahrenen und weiterhin abgesenkten Stellung. Im ersten Hubbereich H1 sind die Führungselemente 32a, 32b nur in den horizontalen Abschnitten der L-förmigen Kulissen 31a, 31b geführt, so dass sich die vertikale Position der Auflageschiene 12 nicht ändert und in dem ersten Hubbereich H1 nur eine horizontale Bewegung HB der Auflageschiene 12 in Fahrzeuglängsrichtung L nach vorne von der eingefahrenen Stellung in die ausgefahrene Stellung erzeugt wird. Die Führungselemente 32c, 32d der Auflageschiene 13 befinden sich an den unteren Enden der Mitnehmerausnehmungen 36c, 36d des Betätigungselements 35 und an den hinteren Enden der horizontalen Abschnitte der L-förmigen Kulissen 31c, 31d des Kulissenelements 30. Die Auflageschiene 13 befindet sich somit in einer nach hinten ausgefahrenen und abgesenkten Stellung. Im ersten Hubbereich H1 sind die Führungselemente 32c, 32d nur in den horizontalen Abschnitten der L-förmigen Kulissen 31c, 31d geführt, so dass sich die vertikale Position der Auflageschiene 13 nicht ändert und in dem ersten Hubbereich H1 nur eine horizontale Bewegung HB der Auflageschiene 13 in Fahrzeuglängsrichtung L nach hinten von der eingefahrenen Stellung in die ausgefahrene Stellung erzeugt wird.

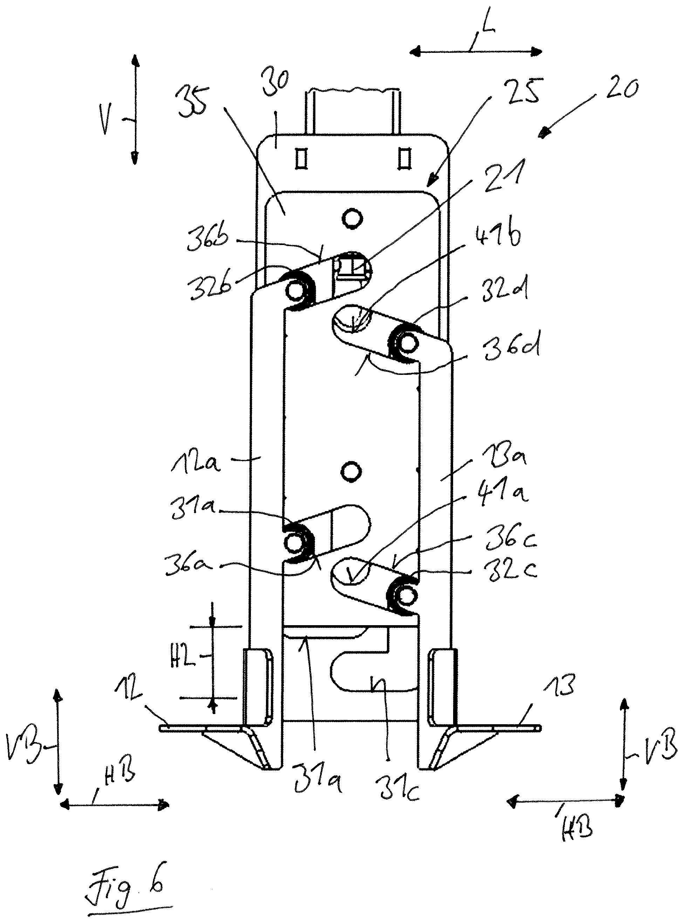

Die Figur 6 zeigt die Hubvorrichtung 20 am Ende eines zweiten Hubbereichs H2, der sich an den ersten Hubbereich H1 anschließt. Der Hubaktuator 21 ist um den weiteren Hub H2 nach vertikal oben ausgefahren und hat das mit dem Hubaktuator 21 gekoppelte Betätigungselement 35 um den weiteren Hub H2 angehoben. Die Führungselemente 32a, 32b der Auflageschiene 12 verbleiben hierbei an den unteren Enden der Mitnehmerausnehmungen 36a, 36b des Betätigungselements 35 und werden in den vertikalen Abschnitten der L-förmigen Kulissen 31a, 31b des Kulissenelements 30 bis zu deren oberen Enden geführt. Die Auflageschiene 12 befindet sich somit in einer nach vorne ausgefahrenen und angehobenen Stellung. Im zweiten Hubbereich H2 sind die Führungselemente 32a, 32b nur in den vertikalen Abschnitten der L-förmigen Kulissen 31a, 31b geführt, so dass sich die horizontale Position der ausgefahrenen Auflageschiene 12 in Fahrzeuglängsrichtung L nicht ändert und in dem zweiten Hubbereich H2 nur eine vertikale Bewegung VB der ausgefahrenen Auflageschiene 12 von der abgesenkten Stellung in die angehobene Stellung in vertikaler Richtung V erzeugt wird. Analog verbleiben die Führungselemente 32c, 32d der Auflageschiene 13 ebenfalls an den unteren Enden der Mitnehmerausnehmungen 36c, 36d des Betätigungselements 35 und werden in den vertikalen Abschnitten der L-förmigen Kulissen 31c, 31d des Kulissenelements 30 bis zu deren oberen Enden geführt. Die Auflageschiene 13 befindet sich somit in einer nach hinten ausgefahrenen und angehobenen Stellung. Im zweiten Hubbereich H2 sind die Führungselemente 32c, 32d nur in den vertikalen Abschnitten der L-förmigen Kulissen 31c, 31d geführt, so dass sich die horizontale Position der ausgefahrenen Auflageschiene 13 in Fahrzeuglängsrichtung L nicht ändert und in dem zweiten Hubbereich H2 nur eine vertikale Bewegung VB der ausgefahrenen Auflageschiene 13 von der abgesenkten Stellung in die angehobene Stellung in vertikaler Richtung V erzeugt wird.

Die aus dem Kulissenelement 30 und dem Betätigungselement 35 bestehende Koppeleinrichtung 25 ist somit derart ausgebildet, dass in dem ersten Hubbereich H1 des Hubaktuators 21 ausschließlich die entsprechende horizontale Bewegung HB der Auflageschiene 12, 13 von der eingefahrenen Stellung in die ausgefahrene Stellung und in dem anschließenden zweiten Hubbereich H2 ausschließlich die vertikale Bewegung VB der Auflageschiene 12, 13 von der abgesenkten Stellung in die angehobene Stellung erzeugt wird.

Bevorzugt weist der Hubaktuator 21 eine Gesamthub (H1+H2) im Bereich von 100mm auf, wobei sich der erste Hubbereich H1 über die ersten 20mm des Gesamthubs erstreckt und der zweite Hubbereich H2 über die restlichen 80mm des Gesamthubs erstreckt. Die Kopplungseinrichtung 25 ist bevorzugt derart ausgeführt, dass sich im ersten Hubbereich H1 eine horizontale Bewegung HB der Auflageschienen 11-14 im Bereich von 60mm ergibt. Ausgehend von der Figur 4 werden somit die Auflageschienen 11-14 bei der Hubbewegung des Hubaktuators 21 zuerst um 60mm in horizontaler Fahrzeuglängsrichtung L nach vorne bzw. hinten ausgefahren (Figur 5) und anschließend um 80mm in vertikaler Richtung V angehoben (Figur 6). Der Hubaktuator 21 macht hierbei den Gesamthub von 100mm, wobei der erste Hubbereich H1 des Hubaktuators 21 von 20mm in die horizontale Bewegung HB der Auflageschienen 11-14 umgewandelt wird und der zweite Hubbereich H2 des Hubaktuators 21 von 80mm in die vertikale Bewegung VB der Auflageschienen 11-14 umgewandelt wird.

Es versteht sich, dass der Aufbau der Hubvorrichtung 20 der Auflageschiene 11 dem Aufbau der Hubvorrichtung 20 der Auflageschiene 13 entspricht und der Aufbau der Hubvorrichtung 20 der Auflageschiene 14 dem Aufbau der Hubvorrichtung 20 der Auflageschiene 12 entspricht.

Zur Aufnahme eines Ladungsträgers in den Trailerzuganhänger 1 befinden sich die Auflageschienen 11-14 in der Stellung gemäß der Figur 4 mit abgesenkten und eingefahrenen Auflageschienen 11-14. Ein Ladungsträger, beispielsweise ein Bodenroller kann somit in Fahrzeugquerrichtung Q des Routenzuganhängers 1 zwischen die Auflageschienen 11, 12 bzw. 13, 14 eingeschoben werden, ohne dass zwischen den Rollen des Bodenrollers und den Auflageschienen 11, 12 bzw. 13, 14 Störkonturen entstehen. Sobald sich der Ladungsträger an der richtigen Stelle befindet, können die Auflageschienen 11-14 in die Stellung der Figur 5 ausgefahren werden und anschließend in die Stellung der Figur 6 angehoben werden, so dass der Ladungsträger von den Auflageschienen 11, 12 bzw. 13, 14 untergriffen und angehoben wird.

## Patentansprüche

1. Hubvorrichtung (20) eines Routenzuganhängers (1) zum Anheben und Absenken eines in dem Routenzuganhänger (1) mitgeführten Ladungsträgers, wobei die Hubvorrichtung (20) zum Anheben und Absenken des Ladungsträgers mindestens eine in vertikaler Richtung (V) höhenverstellbare Auflageschiene (11, 12; 13, 14) aufweist, die ausgeführt ist, den Ladungsträger zu untergreifen, wobei die Auflageschiene (11, 12; 13, 14) in horizontaler Richtung (L) zwischen einer eingefahrenen Stellung und einer ausgefahrenen Stellung bewegbar ist, **dadurch gekennzeichnet, dass** die Hubvorrichtung (20) ausgeführt ist, eine horizontale Bewegung (HB) der Auflageschiene (11, 12; 13, 14) in horizontaler Richtung (L) und eine an die horizontale Bewegung (HB) anschließende vertikale Bewegung (VB) der Auflageschiene (11, 12, 13; 14) in vertikaler Richtung (V) zu erzeugen, wobei die Hubvorrichtung (20) einen Hubaktuator (21) aufweist, der mittels einer Koppeleinrichtung (25) mit mindestens einer Auflageschiene (11; 12; 13; 14) in Wirkverbindung steht, wobei die Koppeleinrichtung (25) ausgebildet ist, eine vertikale Hubbewegung (H1, H2) des Hubaktuators (21) in die horizontale Bewegung (HB) und in die an die horizontale Bewegung (HB) anschließende vertikale Bewegung (VB) der Auflageschiene (11, 12; 13; 14) umzuwandeln.

2. Hubvorrichtung nach Anspruch 1, **dadurch gekennzeichnet, dass** die Koppeleinrichtung (25) derart ausgebildet ist, dass in einem ersten Hubbereich (H1) des Hubaktuators (21) die horizontale Bewegung (HB) der Auflageschiene (11; 12; 13; 14) und in einem anschließenden zweiten Hubbereich (H2) die vertikale Bewegung (VB) der Auflageschiene (11; 12; 13; 14) erzeugbar ist.

3. Hubvorrichtung nach Anspruch 1 oder 2, **dadurch gekennzeichnet, dass** die Koppeleinrichtung (25) ein Kulissenelement (30) aufweist, das mit mindestens einer L-förmigen Kulisse (31a; 31b; 31c; 31d), insbesondere einem L-förmigen Langloch, versehen ist, in der die Auflageschiene (11; 12; 13; 14) geführt ist.

4. Hubvorrichtung nach Anspruch 3, **dadurch gekennzeichnet, dass** die Auflageschiene (11; 12; 13; 14) mittels eines Führungselements (32a; 32b; 32c; 32d), insbesondere einer Rolle oder eines Gleitsteins, in der L-förmigen Kulisse (31a; 31b; 31c; 31d) geführt ist.

5. Hubvorrichtung nach einem der Ansprüche 1 bis 4, **dadurch gekennzeichnet, dass** die Koppeleinrichtung (25) ein mit dem Hubaktuator (21) in Wirkverbindung stehendes Betätigungselement (35) aufweist, das mit mindestens einer Mitnehmerausnehmung (36a; 36b; 36c; 36d), insbesondere einem Langloch, versehen ist, in der die Auflageschiene (11; 12; 13; 14) mit dem Führungselement (32a; 32b; 32c; 32d) geführt ist.

6. Hubvorrichtung nach Anspruch 5, **dadurch gekennzeichnet, dass** die Mitnehmerausnehmung (36a; 36b; 36c; 36d) als gegenüber der Vertikalen (V) geneigtes Langloch ausgebildet ist.

7. Hubvorrichtung nach Anspruch 5 oder 6, **dadurch gekennzeichnet, dass** das Betätigungselement (35) an dem Kulissenelement (30) in vertikaler Richtung (V) geführt ist.

8. Routenzuganhänger (1) mit einem Fahrgestell (2), das zwei in Fahrzeuglängsrichtung (L) beabstandet angeordnete Achsmodule (2a, 2b) aufweist, zwischen denen mindestens ein mitgeführter Ladungsträger aufnehmbar ist, wobei der Routenzuganhänger (1) mit einer Hubvorrichtung (20) nach einem der vorangegangenen Ansprüche versehen ist.

9. Routenzuganhänger nach Anspruch 8, **dadurch gekennzeichnet, dass** der Routenzuganhänger (1) einen die Achsmodule (2a, 2b) verbindenden Brückenrahmen (15) aufweist, der an den Achsmodulen (2a, 2b) angeordnete Vertikalstützen (16a, 16b) und einen die Vertikalstützen (16a, 16b) verbindenden Längsträger (17) aufweist, wobei an den Vertikalstützen (16a, 16b) jeweils eine Hubvorrichtung (20) nach einem der Ansprüche 1 bis 9 mit einer Auflageschiene (11, 14) angeordnet ist.

10. Routenzuganhänger nach Anspruch 9, **dadurch gekennzeichnet, dass** an dem Längsträger (17) ein vertikaler Mittelträger (18) angeordnet ist, wobei an dem Mittelträger (18) eine Hubvorrichtung (20) nach einem der Ansprüche 1 bis 9 mit zwei Auflageschienen (12, 13) angeordnet ist.

11. Routenzuganhänger nach einem der Ansprüche 8 bis 10, **dadurch gekennzeichnet, dass** die Auflageschienen (11; 12; 13; 14) in Fahrzeugquerrichtung (Q) des Routenzuganhängers (1) verlaufen und die horizontale Bewegung (HB) der Auflageschienen (11; 12; 13; 14) in Fahrzeuglängsrichtung (L) des Routenzuganhängers (1) verläuft.

12. System umfassend einen Routenzuganhänger (1) nach einem der Ansprüche 8 bis 11 und mindestens einen Ladungsträger, wobei die Aufnahmeschienen (11; 12; 13; 14) mit der Unterseite eines Bauteils des Ladungsträgers in Wirkverbindung bringbar sind.

13. System nach Anspruch 12, **dadurch gekennzeichnet, dass** der Ladungsträger als Bodenroller ausgebildet ist, der einen mit Rollen versehenen Tragrahmen aufweist, oder als Palette oder als Gitterbox oder als fahrerloses Transportfahrzeug ausgebildet ist.

## Claims

1. Lifting apparatus (20) of a tugger-train trailer (1) for raising and lowering a load carrier which is carried along in the tugger-train trailer (1), wherein the lifting apparatus (20), for lifting and lowering the load carrier, has at least one bearing rail (11, 12; 13, 14) which is height-adjustable in a vertical direction (V) and which is designed to engage below the load carrier, wherein the bearing rail (11, 12; 13, 14) is movable in a horizontal direction (L) between a retracted position and an extended position, **characterized in that** the lifting apparatus (20) is designed to produce a horizontal movement (HB) of the bearing rail (11, 12; 13, 14) in the horizontal direction (L) and a vertical movement (VB), following the horizontal movement (HB), of the bearing rail (11, 12, 13; 14) in the vertical direction (V), wherein the lifting apparatus (20) has a lifting actuator (21) which is operatively connected to at least one bearing rail (11; 12; 13; 14) by means of a coupling device (25), wherein the coupling device (25) is configured to convert a vertical lifting movement (H1, H2) of the lifting actuator (21) into the horizontal movement (HB) and into the vertical movement (VB), following the horizontal movement (HB), of the bearing rail (11, 12; 13; 14).

2. Lifting apparatus according to Claim 1, **characterized in that** the coupling device (25) is configured in such a way that the horizontal movement (HB) of the bearing rail (11; 12; 13; 14) is able to be produced in a first lifting range (H1) of the lifting actuator (21) and the vertical movement (VB) of the bearing rail (11; 12; 13; 14) is able to be produced in a subsequent, second lifting range (H2).

3. Lifting apparatus according to Claim 1 or 2, **characterized in that** the coupling device (25) has a slotted-guide element (30) which is provided with at least one L-shaped slotted guide (31a; 31b; 31c; 31d), in particular one L-shaped slot, in which the bearing rail (11; 12; 13; 14) is guided.

4. Lifting apparatus according to Claim 3, **characterized in that** the bearing rail (11; 12; 13; 14) is guided in the L-shaped slotted guide (31a; 31b; 31c; 31d) by means of a guide element (32a; 32b; 32c; 32d), in particular a roller or a sliding block.

5. Lifting apparatus according to one of Claims 1 to 4, **characterized in that** the coupling device (25) has an actuating element (35) which is operatively connected to the lifting actuator (21) and which is provided with at least one driver cutout (36a; 36b; 36c; 36d), in particular one slot, in which the bearing rail (11; 12; 13; 14) is guided by way of the guide element (32a; 32b; 32c; 32d).

6. Lifting apparatus according to Claim 5, **characterized in that** the driver cutout (36a; 36b; 36c; 36d) is configured as a slot which is inclined with respect to the vertical (V).

7. Lifting apparatus according to Claim 5 or 6, **characterized in that** the actuating element (35) is guided on the slotted-guide element (30) in the vertical direction (V).

8. Tugger-train trailer (1) having a chassis (2) with two axle modules (2a, 2b) which are arranged spaced apart in a vehicle longitudinal direction (L) and between which it is possible to receive at least one load carrier that is carried along, wherein the tugger-train trailer (1) is provided with a lifting apparatus (20) according to one of the preceding claims.

9. Tugger-train trailer according to Claim 8, **characterized in that** the tugger-train trailer (1) has a bridge frame (15) connecting the axle modules (2a, 2b), which has vertical supports (16a, 16b) arranged on the axle modules (2a, 2b) and has a longitudinal member (17) connecting the vertical supports (16a, 16b), wherein, on the vertical supports (16a, 16b), there is arranged in each case one lifting apparatus (20) according to one of Claims 1 to 9 with a bearing rail (11, 14).

10. Tugger-train trailer according to Claim 9, **characterized in that** a vertical central member (18) is arranged on the longitudinal member (17), wherein a lifting apparatus (20) according to one of claims 1 to 9 with two bearing rails (12, 13) is arranged on the central member (18).

11. Tugger-train trailer according to one of Claims 8 to 10, **characterized in that** the bearing rails (11; 12; 13; 14) extend in a vehicle transverse direction (Q) of the tugger-train trailer (1), and the horizontal movement (HB) of the bearing rails (11; 12; 13; 14) extends in the vehicle longitudinal direction (L) of the tugger-train trailer (1).

12. System comprising a tugger-train trailer (1) according to one of Claims 8 to 11 and at least one load carrier, wherein the bearing rails (11; 12; 13; 14) are able to be brought into operative connection with the bottom side of a component of the load carrier.

13. System according to Claim 12, **characterized in that** the load carrier is configured as a floor roller which has a supporting frame provided with rollers, or is configured as a pallet or as a grid box or as a driverless transport vehicle.

## Revendications

1. Dispositif de levage (20) d'une remorque de train tracteur (1) pour soulever et abaisser un porte-charge transporté dans la remorque de train tracteur (1), le dispositif de levage (20) comportant pour soulever et abaisser le porte-charge au moins un rail de support (11, 12 ; 13, 14) ajustable en hauteur dans le sens vertical (V), qui est réalisé pour venir en prise par le bas avec le porte-charge, le rail de support (11, 12 ; 13, 14) pouvant être déplacé dans la direction horizontale (L) entre une position rétractée et une position déployée, **caractérisé en ce que** le dispositif de levage (20) est réalisé pour générer un déplacement horizontal (HB) du rail de support (11, 12 ; 13, 14) dans le sens horizontal (L) et un déplacement vertical (VB) du rail de support (11, 12, 13 ; 14) dans le sens vertical (V), situé dans le prolongement du déplacement horizontal (HB), le dispositif de levage (20) comportant un actionneur de levage (21) qui est relié de manière fonctionnelle au moyen d'un système d'accouplement (25) à au moins un rail de support (11 ; 12 ; 13 ; 14), le système d'accouplement (25) étant formé pour convertir un déplacement de levage vertical (H1, H2) de l'actionneur de levage (21) en le déplacement horizontal (HB) et en le déplacement vertical (VB) du rail de support (11, 12 ; 13 ; 14) situé dans le prolongement du déplacement horizontal (HB).

2. Dispositif de levage selon la revendication 1, **caractérisé en ce que** le système d'accouplement (25) est formé de telle manière que, dans une première zone de levage (H1) de l'actionneur de levage (21), le déplacement horizontal (HB) du rail de support (11 ; 12 ; 13 ; 14) et, dans une deuxième zone de levage (H2) située dans le prolongement, le déplacement vertical (VB) du rail de support (11 ; 12 ; 13 ; 14) peuvent être générés.

3. Dispositif de levage selon la revendication 1 ou 2, **caractérisé en ce que** le système d'accouplement (25) comporte un élément de coulisse (30) qui est pourvu d'au moins une coulisse en forme de L (31a ; 31b ; 31c ; 31d), en particulier un trou oblong en forme de L, dans lequel est guidé le rail de support (11 ; 12 ; 13 ; 14).

4. Dispositif de levage selon la revendication 3, **caractérisé en ce que** le rail de support (11 ; 12 ; 13 ; 14) est guidé dans la coulisse en forme de L (31a ; 31b ; 31c ; 31d) au moyen d'un élément de guidage (32a ; 32b ; 32c ; 32d), en particulier d'un galet ou d'un coulisseau.

5. Dispositif de levage selon l'une des revendications 1 à 4, **caractérisé en ce que** le système d'accouplement (25) comporte un élément d'actionnement (35) relié de manière fonctionnelle à l'actionneur de levage (21), lequel est pourvu au moins d'un évidement d'entraînement (36a ; 36b ; 36c ; 36d), en particulier d'un trou oblong, dans lequel le rail de support (11 ; 12 ; 13 ; 14) est guidé avec l'élément de guidage (32a ; 32b ; 32c ; 32d).

6. Dispositif de levage selon la revendication 5, **caractérisé en ce que** l'évidement d'entraînement (36a ; 36b ; 36c ; 36d) est formé comme un trou oblong incliné par rapport à la verticale (V).

7. Dispositif de levage selon la revendication 5 ou 6, **caractérisé en ce que** l'élément d'actionnement (35) est guidé dans la direction verticale (V) sur l'élément de coulisse (30).

8. Remorque de train tracteur (1) avec un châssis (2), qui comporte deux modules d'essieu (2a, 2b) disposés à distance dans le sens longitudinal (L) de véhicule, entre lesquels au moins un porte-charge transporté peut être reçu, **caractérisée en ce que** la remorque de train tracteur (1) est pourvue d'un dispositif de levage (20) selon l'une des revendications précédentes.

9. Remorque de train tracteur selon la revendication 8, **caractérisée en ce que** la remorque de train tracteur (1) comporte un cadre de pont (15) reliant les modules d'essieu (2a, 2b), lequel comporte des montants verticaux (16a, 16b) disposés sur les modules d'essieu (2a, 2b) et un support longitudinal (17) reliant les montants verticaux (16a, 16b), un dispositif de levage (20) selon l'une des revendications 1 à 9 avec un rail de support (11, 14) étant disposé sur les montants verticaux (16a, 16b).

10. Remorque de train tracteur selon la revendication 9, **caractérisée en ce qu'**un support central vertical (18) est disposé sur le support longitudinal (17), un dispositif de levage (20) selon l'une des revendications 1 à 9 avec deux rails de support (12, 13) étant disposé sur le support central (18).

11. Remorque de train tracteur selon l'une des revendications 8 à 10, **caractérisée en ce que** les rails de support (11 ; 12 ; 13 ; 14) s'étendent dans le sens transversal (Q) de véhicule de la remorque de train tracteur (1) et le déplacement horizontal (HB) des rails de support (11 ; 12 ; 13 ; 14) s'étend dans le sens longitudinal (L) de véhicule de la remorque de train tracteur (1).

12. Système comprenant une remorque de train tracteur (1) selon l'une des revendications. 8 à 11 et au moins un porte-charge, les rails de support (11 ; 12 ; 13 ; 14) pouvant être reliés de manière fonctionnelle à la face inférieure d'un composant du porte-charge.

13. Système selon la revendication 12, **caractérisé en ce que** le porte-charge est formé comme un rouleau de sol qui comporte un cadre porteur pourvu de rouleaux, ou est formé comme une palette ou une caisse grillagée ou un véhicule de transport sans conducteur.
